# EUROPÄISCHE PATENTSCHRIFT

(11) **EP 1 485 260 B1**
(45) Veröffentlichungstag und Bekanntmachung des Hinweises auf die Patenterteilung: **27.12.2006**
(21) Anmeldenummer: 03711975.7
(22) Anmeldetag: 11.03.2003
(51) Int. Cl.: B42D 15/10

(54) **VERFAHREN ZUR MASSENWEISEN HERSTELLUNG OPTISCHER SICHERHEITSELEMENTE**
METHOD FOR THE MASS-PRODUCTION OF OPTICAL SECURITY ELEMENTS
PROCEDE DE PRODUCTION A GRANDE ECHELLE D'ELEMENTS DE SECURITE OPTIQUES

(30) Priorität: 12.03.2002 DE 10210836
(43) Veröffentlichungstag der Anmeldung: 15.12.2004
(73) Patentinhaber: Giesecke & Devrient GmbH, 81677 München (DE)
(72) Erfinder: DAUSMANN, Günther, 85630 Grasbrunn (DE); MENZ, Irina, 86420 Diedorf (DE)
(86) Internationale Anmeldenummer: PCT/EP2003/002493
(87) Internationale Veröffentlichungsnummer: WO 2003/077042

(56) Entgegenhaltungen:
- CH-A- 690 232
- US-A- 3 757 688
- US-A- 5 744 219

## Beschreibung

Die Erfindung betrifft ein Verfahren zur massenweisen Herstellung individueller geprägter diffraktiver optischer Sicherheitselemente zum Wert- und Sicherheitsdokumentenschutz.

In EP 0 896 260 A2 wird ein Verfahren beschrieben, mit dem diffraktive, volumenholographische, individuelle Sicherheitsmerkmale durch individuelle Laserbelichtung jedes einzelnen Sicherheitselementes in Photomaterial massenweise hergestellt werden.

Dieses Verfahren ist im Vergleich zur Hologrammreplikation durch Prägung sehr kostenintensiv sowohl im Materialeinsatz als auch hinsichtlich des notwendigen Laserequipments.

Ein anderes Verfahren wird in der Offenlegungsschrift DE-A-198 02 585 beschrieben, bei dem die Individualisierung dadurch erreicht wird, daß nur bestimmte Areale einer oberflächenstrukturierbaren UV-Lackschicht, welche sich in Kontakt mit einem diffraktiven Oberflächengitter befindet, mittels UV-Licht belichtet, abgeformt und ausgehärtet werden. Der nicht belichtete Rest der UV-Lackschicht wird naßchemisch wieder entfernt oder ausgewaschen. Nach jedem Belichtungs-/Abformungsschritt können die Belichtungsareale mit einer anderen individuellen Form neu festgelegt werden. Ein Nachteil dieses Verfahrens für eine Massenherstellung individueller Sicherheitsmerkmale ist die Notwendigkeit der Entfernung von nicht ausgehärtetem UV-Lack. In der Produktionsstrecke müßten Spülstationen mit anschließender Trocknung installiert werden. Weiterhin besteht die hinlänglich bekannte Gefahr, daß infolge von Haftproblemen gehärtete UV-Lackreste das diffraktive Oberflächenrelief verunreinigen können. Ein weiterer Nachteil dieses Verfahrens besteht darin, daß erst nach der Herstellung der individuellen diffraktiven Elemente die Oberfläche metallisiert oder mit einem hochbrechenden Material bedampft werden kann, ehe für die Applikation auf Dokumente der notwendige Kleber aufgetragen werden kann.

Das bedeutet für die Anwender dieses Verfahrens, daß kostenintensive Bedampfungsanlagen zur Verfügung stehen müssen oder die individuellen Sicherheitselemente außer Haus bedampft werden müssen, was ein Sicherheitsrisiko darstellt.

Weitere Verfahren sind bekannt, beispielsweise eine nachträgliche Individualisierung von gleichartigen diffraktiven optischen Sicherheitselementen durch Lasergravur oder Teildemetallisierungen. Bei beiden Verfahren wird die Metallisierung und das diffraktive Element in diesen Bereichen zerstört. Die eigentliche individuelle Information, speziell bei der Lasergravur, ist nicht holografisch. Wünschenswert wäre, wenn gerade diese holografisch ist, weil dies als eine weitere Aufwertung des Sicherheitslevels angesehen werden kann. Darüber hinaus erfordert die Demetallisierung erheblichen technischen Aufwand. Auch hierbei sind Spülkaskaden zur Entfernung der abgelösten Teile notwendig.

DE 43 13 521 C1 schlägt zur nachträglichen Individualisierung geprägter diffraktiver optischer Elemente ein Auffüllen von Teilen der diffraktiven Strukturen mittels Überdruck vor, was zu einer Vernichtung der diffraktiven Strukturen in diesen Teilgebieten führt. Ein Nachteil ist, daß erst nach dem individuellen Drucken auf die diffraktiven Strukturen metallisiert oder mit hochbrechenden Dielektrika bedampft werden kann, was für den Anwender dieses Verfahrens die Anschaffung oder Nutzung kostenintensiver Bedampfungsanlagen bedeutet.

Ein bekanntes Verfahren ist in US-A-5 744 219 offenbart.

Der Erfindung liegt die Aufgabe zugrunde, massenweise geprägte, diffraktive optische Sicherheitsmerkmale zu produzieren, wobei jedes einzelne Sicherheitsmerkmal in seinem Informationsgehalt individuell auf das zu applizierende Wertdokument abgestimmt sein soll.

Diese Aufgabe wird mit einem Verfahren mit den Merkmalen des Anspruches 1 gelöst. Vorteilhafte Ausgestaltungen ergeben sich aus den abhängigen Ansprüchen.

Mit der Erfindung kann erreicht werden, daß die auf Wertdokumenten gedruckten Informationen wie z. B. fortlaufende Nummern auf Banknoten oder gedruckte Individualdaten in Reisepässen, ID-Karten usw. mit den individuellen Informationen der diffraktiven optischen Sicherheitsmerkmale verknüpft sind, was die Fälschungssicherheit signifikant erhöht. Außerdem ist die Massenproduktion dieser individuellen Sicherheitsmerkmale kostengünstiger als bekannte Wege zur Produktion individueller diffraktiver Sicherheitsmerkmale. Darüber hinaus wird das Sicherheitslevel des individuellen diffraktiven Sicherheitsmerkmales weiter erhöht.

Vorteile der vorliegenden Erfindung sind, daß die nach dem erfindungsgemäßen Verfahren hergestellten individuellen Sicherheitsmerkmale in den informationstragenden Elementen diffraktiv sind und die Metallisierung auf der gesamten Fläche des Sicherheitselementes erhalten bleibt, was als eine Aufwertung des Sicherheitslevels angesehen werden kann. Es kann eine kostengünstigere und vom Produktionsprozeß her weniger störanfällige Produktionslinie als die für die bekannten Verfahren, die Spülkaskaden benötigen, verwendet werden. Kostenaufwendige Bedampfungsanlagen, wie im Fall der Individualisierung durch Auffüllen der diffraktiven Strukturen mit Drucklack oder des oben angeführten UV-Belichtungprozesses sind nicht notwendig, da bereits metallisierte oder mit hochbrechenden Dielektrika bedampfte prägbare Folien eingesetzt werden können, die von Prägefolienherstellern auch ohne Kleber vertrieben werden.

Die Erfindung beruht auf der Erkenntnis, daß es möglich ist, in Massenproduktion diffraktive optische Sicherheitselemente mit sich ständig änderndem Informationsgehalt herzustellen, indem nur gezielte, sich pro Nutzeneinheit ständig ändernde Teilbereiche eines prägefähigen Materials so erhitzt werden, daß nur in diese Teilbereiche ein diffraktives Oberflächengitter durch Prägung transferiert werden kann, wobei als Voraussetzung für eine Massenproduktion das zu transferierende Oberflächengitter, welches mittels eines Prägekopfes, bestehend aus variablen Prägeflächen, auf das zu prägende Material gedrückt wird, auf einem transportierbaren Träger angebracht ist.

Die Erfindung wird im folgenden im Detail anhand eines Ausführungsbeispieles erläutert. Dabei zeigt
- Figur 1: schematisch eine Prägefolie, wie sie für das erfindungsgemäße Verfahren eingesetzt werden kann und
- Figur 2: in seitlicher Schemaansicht eine Vorrichtung zur Durchführung des erfindungsgemäßen Verfahrens.

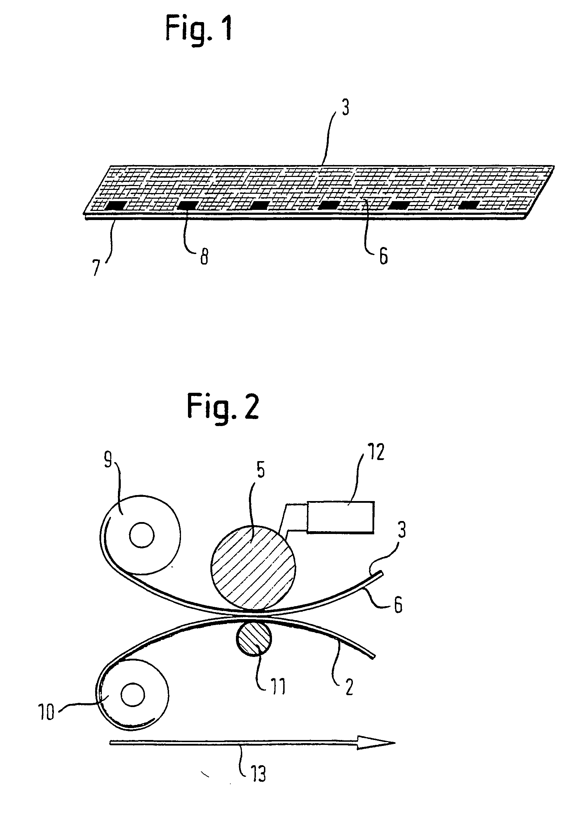

Figur 1 zeigt eine Folie 3, die ein diffraktives Oberflächengitter 6 in eine Thermo-/UV-Lackschicht mit hohem Erweichungspunkt Tg trägt. Die Folie 3 befindet sich auf einem PET-Träger 7. Sie kann Steuermarken 8 aufweisen, die zur Ausrichtung und Steuerung einer definierten Fortbewegung der Folie 3 dienen können.

Figur 2 zeigt in schematischer Darstellung eine Ausgestaltung des erfindungsgemäßen Verfahrens. Von einer Vorratsrolle 9 wird die Folie 3 mit dem diffraktiven Oberflächengitter 6 abgerollt. Gleichzeitig wird von einer zweiten Rolle 10 das prägefähige Material 2 abgerollt, in das das diffraktive Oberflächengitter übertragen werden soll.

Die Folie und das zu prägende Material werden zusammen zwischen einen Prägekopf 5 und eine Gegendruckwalze 11 geführt, so daß sich die prägefähige Seite des Materials 2 und das diffraktive Oberflächengitter 6 der Folie berühren. Der Prägekopf wird von einer Steuereinheit 12 angesteuert. Die Transportrichtung der Folie bzw. des prägefähigen Materials ist mit dem Pfeil 13 bezeichnet und kann z. B. durch eine entsprechende Zugeinrichtung hervorgerufen werden.

Die Aufgabe der Erfindung wird dadurch gelöst, daß zunächst für eine Massenproduktion gewährleistet werden muß, daß sich das diffraktive Oberflächengitter 6, welches durch Prägung in das prägefähige Material 2 übertragen wird, nicht im Laufe der Produktion abnutzt. Es ist allgemein bekannt, daß sich diffraktive Prägematrizen, insbesondere bei kleinen Geometrien, schnell abnutzen, d.h. die Tiefe der zu prägenden Strukturen wird immer geringer und damit der Beugungswirkungsgrad der geprägten diffraktiven Strukturen. Die Matrizen müssen ständig gewechselt werden. Dieses Problem wird dadurch gelöst, daß sich das zu übertragende diffraktive Gitter 6 auf einer Trägerfolienrolle 3 befindet, die nach jeder Individualprägung weitertransportiert wird, so daß für jede neue Prägung ein noch ungebrauchtes Oberflächengitter zur Verfügung steht.

Weiterhin muß gewährleistet sein, daß das zu übertragende diffraktive Gitter 6 bei der Temperaturbelastung während des Prägevorganges stabil bleibt, um eine originalgetreue Gitterübertragung zu erreichen. Es bieten sich metallische Folien, z. B. Aluminiumfolien, an, in die vor dem Einsatz für das erfindungsgemäße Verfahren mit konventioneller Folienprägetechnik ein diffraktives Gitter, z. B. als Endlosmuster, hineingeprägt werden kann.

Überraschenderweise hat sich gezeigt, daß auch holografisch geprägte, mit Thermolack beschichtete Polyesterfolien als Transferfolie 3, z. B. Hologrammprägefolien für eine spätere Heißapplikation oder für Hologrammetiketten, und diffraktive Folien, die mittels bekannter UV-Castingtechnik hergestellt wurden, geeignet sind. Vor allem muß gewährleistet sein, daß diese oberflächengittertragenden Folien einen höheren Erweichungspunkt haben als das Material 2, in welches Teile dieses Oberflächengitters durch Prägung transferiert werden soll. Es hat sich herausgestellt, daß bei richtiger Auswahl der von Prägefolienherstellern angebotenen diffraktiven Folien 3 ohne Kleberbeschichtung eine für das erfindungsgemäße Verfahren optimale Material- 2 und Folienkombination 3 gefunden werden konnte. Insbesondere eignen sich diffraktiv geprägte Heißprägefolien ohne Kleberbeschichtung als Transferfolie 3, deren Thermolack- oder UV-Lackschicht für eine Applikation auf Banknoten oder hochschmelzende Plastiksubstrate wie Polycarbonat optimiert ist, während das einzusetzende prägbare Material 2, in welches Teile des diffraktiven Gitters der Folie 3 geprägt werden sollen, einen tieferen Erweichungspunkt aufweisen muß (Figur 1). Beispielsweise eignen sich als prägbares Material 2 metallisierte oder mit hochbrechenden Dielektrika bedampfte Prägefolien, die für die Produktion von Hologrammstickern oder von holografischen Laminatfolien von Prägefolienherstellern angeboten werden.

Desweiteren besteht die Aufgabe, einen geeigneten Prägekopf mit individuell ansteuerbaren Einzelprägeflächen unterschiedlicher geometrischer Form zu finden. Es hat sich herausgestellt, daß sich z. B. ein übliches Heißprägenummerierwerk als Prägekopf 5, auf dem sich Nummernkränze mit einzelnen Nummernstempeln befinden, eignet, um fortlaufend diffraktive Nummern in das prägefähige Material 2 zu prägen, wobei sich die Folie 3 mit der diffraktiven Oberflächenstruktur 6 zur Seite des prägbaren Materials 2 befindet (Figur 2). Es zeigte sich, daß die Transferfolie 3 die Prägung übersteht, ohne einzureißen oder auf dem Material 2 kleben zu bleiben und nach erfolgter Prägung um eine Nutzenlänge weitertransportiert werden kann. Es ist auch möglich, daß sich der Prägekopf 5 auf der Rückseite des prägbaren Materials 2 befindet und dieses Material auf das diffraktive Oberflächengitter 6 der Folie 3 eindrückt.

Es bietet sich auch an, nicht den Prägekopf 5 zu beheizen sondern eine Gegendruckwalze, die die beiden Folien auf die ausgewählten Prägeflächen des Prägekopfes drückt. Die ausgewählten Prägeflächen werden in diesem Fall mit Druck in die Folien geprägt.

Durch Verwendung eines modifizierten, beheizbaren Nummern/Typenradprägewerkzeuges als Prägekopf 5, bei dem die einzelnen Prägeflächen, die die Form von Nummern, Buchstaben und Satzzeichen haben, elektronisch angewählt und in Prägeposition gebracht werden können, ist es möglich, mit einem Prägevorgang beispielsweise vollständige Personaldaten in diffraktiver Ausführung mittels der angewählten Prägeflächenkombination in das Material 2 zu übertragen. Vorteilhafterweise hat sich gezeigt, daß das prägbare Material 2 bereits metallisiert oder mit hochbrechenden Dielektrika, beispielsweise Zinksulfid oder Titandioxid, bedampft sein kann, so daß es möglich ist, nach der individuellen Prägung Kleber, z. B. durch Sprühbeschichtung oder Lamination, aufzutragen und dieses individuelle Sicherheitselement auf das entsprechende Wertdokument zu applizieren. Die Sicherheitsdruckereien, die dieses erfindungsgemäße Verfahren anwenden sollen, benötigen daher keine kostenaufwendigen Bedampfungsanlagen.

Als Prägekopf 5 kann auch ein Thermotransferkopf eingesetzt werden, mit dem man nicht nur Nummern und Schriftinformationen, sondern auch individuelle Bildinformationen über die diffraktionsgittertragende Folie 3 in das prägefähige Material 2 übertragen kann.

Das eingesetzte prägbare Material 2 kann außerdem bereits vor der Individualprägung andere, diffraktive Elemente besitzen, die mit einem konventionellen Präge- oder UV-Casting-Prozeß in die Oberfläche geprägt wurden.

## Patentansprüche

1. Verfahren zur massenweisen Herstellung optischer Elemente durch Einbringen von individuellen diffraktiven optischen Informationen in prägbare Materialien (2), bei dem Teile eines diffraktiven Oberflächenreliefs (6), welches sich auf einer transportierbaren Folie (3) befindet, mittels Flächen eines Prägekopfes (5) in das prägbare Material (2) mit Temperaturunterstützung geprägt werden und nach jeder geprägten Imageeinheit die Folie (3) und das prägbare Material (2) getrennt und weitertransportiert werden, so daß eine weitere Prägung mit geänderter Prägeflächenkombination, die eine neue Information (1) darstellt, stattfinden kann, **dadurch gekennzeichnet, dass** die Flächen des Prägekopfes individuell angesteuert werden.

2. Verfahren nach Anspruch 1, **dadurch gekennzeichnet, daß** die Prägeflächen erhaben sind, insbesondere die Form von Zahlen, Buchstaben und anderer Satzzeichen aufweisen und auf beweglichen Radkränzen am beheizbaren Prägekopf (5) angeordnet sind.

3. Verfahren nach Anspruch 2, bei dem als Prägekopf (5) ein kombiniertes Nummerier/Typenradwerk, bei welchem durch mechanische und elektronische Impulsgebung die einzelnen Prägeflächen in Prägeposition gebracht werden können, eingesetzt wird.

4. Verfahren nach einem der Ansprüche 1 bis 3, bei dem das diffraktive Oberflächenrelief (6) aus mindesten einem diffraktiven Gitter besteht, welches sich vorzugsweise als Endlosmuster in der Oberfläche der Folie (3) befindet.

5. Verfahren nach einem der Ansprüche 1 bis 4, bei dem eine Folie (3) eingesetzt wrid, die aus einer Polyesterträgerschicht und einer Thermolackschicht oder UV-Lackschicht besteht, in die mit üblichen Verfahren ein diffraktives Oberflächenrelief (6) geprägt oder mittels üblicher UV-Castingverfahren abgeformt wurde.

6. Verfahren nach Anspruch 5, bei dem Polyesterträger mit Schichtdicken kleiner 70 µm sowie Thermolack- oder UV-Lackschichten mit einem höheren Erweichungspunkt (Tg) als der des zu prägenden Materials (2) verwendet werden.

7. Verfahren nach einem der Ansprüche 5 oder 6, bei dem die Thermo- oder UV-Lackschicht metallisiert oder mit Dielektrika bedampft ist.

8. Verfahren nach einem der Ansprüche 1 bis 4, bei dem eine Folie (3) aus Metall, vorzugsweise Nickel, eingesetzt wird.

9. Verfahren nach Anspruch 8, insoweit er direkt oder indirekt von Anspruch 2 abhängt, bei dem das diffraktive Oberflächenrelief (6), vorzugsweise als metallische Folie (3), direkt auf die Oberflächen der einzelnen ansteuerbaren beweglichen Prägeflächen, insbesondere um die einzeln beweglichen Radkränze, montiert ist.

10. Verfahren nach einem der Ansprüche 1 bis 9, bei dem als Prägekopf (5) ein Thermotransferkopf eingesetzt wird.

11. Verfahren nach einem der Ansprüche 1 bis 10, bei dem als prägefähiges Material (2) holografisch prägbare Folie für eine spätere Heißapplikation, Prägefolie für Hologrammsticker, mit Thermolack beschichtetes Papier oder prägbares Plastik eingesetzt wird.

12. Verfahren nach Anspruch 11, bei dem das prägbare Material (2) bereits diffraktive Elemente in der prägbaren Oberfläche aufweist.

13. Verfahren nach einem der Ansprüche 1 bis 12, bei dem das eingesetzte prägefähige Material (2) bereits auf der prägbaren Seite metallisiert oder mit hochbrechenden Materialien bedampft ist.

14. Verfahren nach einem der Ansprüche 1 bis 13, bei dem das prägbare Material (2) nach Einprägung der individuellen diffraktiven Informationen auf der geprägten Seite mit Kleber, vorzugsweise Heißkleber, Transfer-Permanentkleber, hitzereaktivierbarem Kleber, beschichtet und auf Wert- und Sicherheitsdokumente appliziert wird.

15. Verfahren nach einem der Ansprüche 1 bis 14, **dadurch gekennzeichnet, daß** in eine Folienprägemaschine eine prägbare, auf der prägefähigen Seite mit hochbrechendem Material oder Metall beschichtete erste Folienrolle (2) mit oder ohne bereits geprägten diffraktiven Elementen eingelegt wird, eine zweite Folienrolle (3), die ein diffraktives Gitter (6) als Endlosmuster in der Oberfläche hat, ebenfalls so in die Maschine eingelegt wird, daß das diffraktive Gitter (6) zur prägbaren Seite der Folienrolle (2) zeigt, beide Folien zum Prägekopf (5) der Folienprägemaschine geführt und unter Druck an die beheizten, individuell in Position gebrachten Prägeflächen bzw. an den individuell beheizten Thermotransferdruckkopf (5) der Folienprägemäschine gepreßt werden, wobei die angesteuerte Prägeflächenkombination in ihrer Gesamtform eine gewünschte Information darstellt, nach der Übertragung von Teilen des diffraktiven Gitters (6) der zweiten Folie (3) in die erste Folie (2) die Folien weitertransportiert und voneinander getrennt werden, nach jeder Imageeinheit mit einer neuen Prägeflächenkombination geprägt wird, die eine weitere neue individuelle Information darstellt, und in einer nächsten Station die erste Folie (2) mit den individuellen diffraktiven optischen Informationen auf der geprägten Seite mit Kleber beschichtet, vorzugsweise durch Sprühbeschichtung oder Transferkleberlamination, wird, ggf. in einer Trockenzone getrocknet und aufgewickelt oder gleich anschließend auf das Wertdokument, welches nach der Trockenzone zugeführt wird, appliziert und vereinzelt wird.

16. Verfahren nach Anspruch 15, bei dem die individuellen diffraktiven optischen Informationen in der Folie (2) mittels eines Kamerasystemes identifiziert und dem dazugehörigen Wert- oder Sicherheitsdokument, welches beispielsweise gedruckte individuelle Informationen hat, zugeordnet wird.

17. Verwendung eines Verfahrens nach einem der Ansprüche 1 bis 16 zur Massenproduktion individueller diffraktiver optischer Sicherheitsmerkmale.

18. Verwendung nach Anspruch 17 zur Sicherung von Wert- und Sicherheitsdokumenten.

## Claims

1. A method for mass production of optical elements by incorporating individual diffractive optical information into embossable materials (2) wherein parts of a diffractive surface relief (6) which is located on a transportable foil (3) are embossed into the embossable material (2) by means of surfaces of an embossing head (5) with temperature support, and the foil (3) and the embossable material (2) are separated and transported further after each embossed image unit, so that a further embossing can take place with a changed embossing surface combination representing new information (1), **characterized in that** the surfaces of the embossing head are individually driven.

2. The method according to claim 1, **characterized in that** the embossing surfaces are raised, have in particular the form of numbers, letters and other punctuation marks, and are disposed on movable wheel rims on the heatable embossing head (5).

3. The method according to claim 2, wherein the embossing head (5) used is a combined number/type wheel machine wherein the individual embossing surfaces can be moved to the embossing position by mechanical and electronic pulsing.

4. The method according to any of claims 1 to 3, wherein the diffractive surface relief (6) comprises at least one diffractive grating which is located in the surface of the foil (3) preferably as a continuous pattern.

5. The method according to any of claims 1 to 4, wherein a foil (3) is used which comprises a polyester carrier layer and a thermal lacquer layer or UV lacquer layer into which a diffractive surface relief (6) has been embossed by usual methods or cast by usual UV casting methods.

6. The method according to claim 5, wherein polyester carriers with layer thicknesses smaller than 70 µm and layers of thermal lacquer or UV lacquer with a higher softening point (Tg) than that of the material (2) to be embossed are used.

7. The method according to either of claims 5 and 6, wherein the layer of thermal or UV lacquer is metallized or vapor-deposited with dielectrics.

8. The method according to any of claims 1 to 4, wherein a foil (3) made of metal, preferably nickel, is used.

9. The method according to claim 8 insofar as it depends directly or indirectly on claim 2, wherein the diffractive surface relief (6) is mounted, preferably as a metallic foil (3), directly on the surfaces of the individual drivable movable embossing surfaces, in particular around the individually movable wheel rims.

10. The method according to any of claims 1 to 9, wherein the embossing head (5) used is a thermal transfer head.

11. The method according to any of claims 1 to 10, wherein the embossable material (2) used is holographically embossable foil for a later hot application, embossing foil for hologram stickers, paper coated with thermal lacquer, or embossable plastic.

12. The method according to claim 11, wherein the embossable material (2) already has diffractive elements in the embossable surface.

13. The method according to any of claims 1 to 12, wherein the embossable material (2) used is already metallized or vapor-deposited with highly refractive materials on the embossable side.

14. The method according to any of claims 1 to 13, wherein, after embossing of the individual diffractive information, the embossable material (2) is coated on the embossed side with adhesive, preferably hot-melt adhesive, transfer permanent adhesive, heat reactivatable adhesive, and applied to value and security documents.

15. The method according to any of claims 1 to 14, **characterized in that** an embossable first foil roll (2) coated on the embossable side with highly refractive material or metal, with or without already embossed diffractive elements, is inserted into a foil embossing machine, a second foil roll (3) having a diffractive grating (6) as a continuous pattern in the surface is likewise inserted into the machine such that the diffractive grating (6) faces the embossable side of the foil roll (2), the two foils are guided to the embossing head (5) of the foil embossing machine and pressed under pressure onto the heated, individually positioned embossing surfaces or onto the individually heated thermal transfer print head (5) of the foil embossing machine, the driven embossing surface combination representing in its total form a desired piece of information, after the transfer of parts of the diffractive grating (6) of the second foil (3) into the first foil (2) the foils are transported further and separated from each other, embossing is done after each image unit with a new embossing surface combination representing a further new individual piece of information, and in a next station the first foil (2) with the individual diffractive optical information is coated on the embossed side with adhesive, preferably by spraying coating or transfer adhesive lamination, optionally dried in a drying zone and rolled up or directly thereafter applied to the value document which is supplied after the drying zone, and singled.

16. The method according to claim 15, wherein the individual diffractive optical information in the foil (2) is identified by means of a camera system and associated with the corresponding value or security document which has for example printed individual information.

17. Use of a method according to any of claims 1 to 16 for mass production of individual diffractive optical security features.

18. The use according to claim 17 for protecting value and security documents.

## Revendications

1. Procédé de production à grande échelle d'éléments optiques par application d'informations optiques individuelles de diffraction dans des matériaux (2) apte à être gravés, dans lequel des parties d'un relief de surface de diffraction (6) qui se trouve sur une feuille transportable (3), sont gravées au moyen de surfaces d'une tête de gravure (5) dans le matériau (2) apte à être gravé avec une aide thermique, et après chaque unité d'image gravée, la feuille (3) et le matériau (2) apte à être gravé sont séparés et transportés ultérieurement, de sorte qu'une autre gravure avec modification de la combinaison de surface de gravure qui représente une nouvelle information (1) peut avoir lieu, **caractérisé en ce que** les surfaces de la tête de gravure sont commandées individuellement.

2. Procédé selon la revendication 1, **caractérisé en ce que** les surfaces de gravure sont en relief, en particulier ont la forme de chiffres, de lettres et d'autres signes de ponctuation, et sont disposées sur des couronnes de roue mobiles contre la tête de gravure (5) chauffante.

3. Procédé selon la revendication 2, dans lequel est utilisé en tant que tête de gravure (5) un mécanisme combiné de roue de numérotage/d'impression, dans lequel les surfaces de gravure individuelles peuvent être amenées en position de gravure par la génération d'impulsions mécaniques et électroniques.

4. Procédé selon l'une des revendications 1 à 3, dans lequel le relief de surface (6) de diffraction est composé d'au moins un réseau de diffraction qui se trouve de préférence en tant que motif sans fin à la surface de la feuille (3).

5. Procédé selon l'une des revendications 1 à 4, dans lequel est utilisée une feuille (3) qui est formée d'une couche de support en polyester et d'une couche de vernis thermique ou de vernis UV, dans lesquelles un relief de surface (6) de diffraction est gravé avec des procédés courants ou est moulé au moyen de procédés de moulage aux ultraviolets courants.

6. Procédé selon la revendication 5, dans lequel sont utilisés le support en polyester avec des épaisseurs de couche inférieures à 70 µm, ainsi que des couches de vernis thermique ou des couches de vernis UV présentant un point de ramollissement (Tg) supérieur à celui du matériau (2) devant être gravé.

7. Procédé selon l'une des revendications 5 ou 6, dans lequel la couche de vernis thermique ou UV est métallisée ou est vaporisée avec des diélectriques.

8. Procédé selon l'une des revendications 1 à 4, dans lequel une feuille (3) en métal, de préférence en nickel, est utilisée.

9. Procédé selon la revendication 8, dans la mesure où elle dépend directement ou indirectement de la revendication 2, dans lequel le relief de surface (6) de diffraction, de préférence en tant que feuille métallique (3), est monté directement sur les surfaces des surfaces de gravure mobiles individuelles pouvant être commandées, en particulier autour de la couronne de roue individuelle mobile.

10. Procédé selon l'une des revendications 1 à 9, dans lequel une tête de transfert thermique est utilisée en tant que tête de gravure (5).

11. Procédé selon l'une des revendications 1 à 10, dans lequel une feuille apte à être gravée par holographie pour une application ultérieure à chaud, la feuille de gravure pour autocollants hologrammes, avec papier recouvert de vernis thermique ou de plastique apte à être gravé, est utilisée en tant que matériau (2) apte à la gravure.

12. Procédé selon la revendication 11, dans lequel le matériau (2) apte à être gravé comprend déjà des éléments de diffractions dans la surface apte à être gravée.

13. Procédé selon l'une des revendications 1 à 12, dans lequel le matériau (2) apte à la gravure utilisé est déjà métallisé sur la face apte à être gravée ou est vaporisée avec des matériaux hautement réfringents.

14. Procédé selon l'une des revendications 1 à 13, dans lequel le matériau (2) apte à être gravé est recouvert, après la gravure des informations de diffraction individuelles sur la face gravée, de colle, de préférence de colle à chaud, de colle permanente par transfert, de colle réactivable à la chaleur, et est appliqué sur des documents de valeur et de sécurité.

15. Procédé selon l'une des revendications 1 à 14, **caractérisé en ce qu'**un premier rouleau de feuilles (2) apte à être gravé recouvert de métal ou de matériau hautement réfringent sur la face apte à la gravure est introduit dans une machine de gravure de feuilles avec ou sans éléments de diffraction déjà gravés, **en ce qu'**un second rouleau de feuilles (3) qui comporte un réseau de diffraction (6) en tant que motif sans fin à la surface, est également introduit dans la machine, de sorte que le réseau de diffraction (6) apparaît sur la face apte à être gravée du rouleau de feuilles (2), les deux feuilles sont dirigées vers la tête de gravure (5) de la machine de gravure de feuilles et sont comprimées sous pression contre les surfaces de gravure chauffées amenées individuellement en position ou contre la tête d'impression (5) par transfert thermique chauffée individuellement de la machine de gravure de feuilles, la combinaison des surfaces de gravure commandées représentant dans sa forme globale une information souhaitée, **en ce qu'**après le transfert des parties du réseau de diffraction (6) de la seconde feuille (3) dans la première feuille (2) les feuilles sont transportées ultérieurement et séparées les unes des autres, **en ce qu'**après chaque unité d'image est gravée une nouvelle combinaison de surfaces de gravure, qui représente une nouvelle autre information individuelle, et **en ce que** dans un poste suivant, la première feuille (2) avec les informations optiques individuelles de diffraction est recouverte de colle sur la surface gravée, de préférence par revêtement par pulvérisation ou stratification de colle par transfert, le cas échéant est séchée dans une zone de séchage et est enroulée ou aussitôt après appliquée et déliassée sur le document de valeur qui est amené après la zone de séchage.

16. Procédé selon la revendication 15, dans lequel les informations optiques individuelles de diffraction dans la feuille (2) sont identifiées au moyen d'un système de caméra et sont associées au document de valeur et de sécurité correspondant, qui comprend par exemple des informations individuelles imprimées.

17. Utilisation d'un procédé selon l'une des revendications 1 à 16 en vue de la production de masse de caractéristiques de sécurité optiques individuelles de diffraction.

18. Utilisation selon la revendication 17 en vue de la protection des documents de valeur et de sécurité.
